Europäisches Patentamt

(19) European Patent Office

Office européen des brevets

(11) Numéro de publication: **0 069 679**
**A2**

(12)
# DEMANDE DE BREVET EUROPEEN

(21) Numéro de dépôt: **82401293.4**

(22) Date de dépôt: **08.07.82**

(51) Int. Cl.3: **G 01 N 23/06**
**G 01 V 5/12**

(30) Priorité: **08.07.81 FR 8113452**

(43) Date de publication de la demande:
**12.01.83 Bulletin 83/2**

(84) Etats contractants désignés:
**DE FR GB IT NL**

(71) Demandeur: **Schlumberger Limited**
**277 Park Avenue**
**New York, N.Y. 10172(US)**

(84) Etats contractants désignés:
**DE GB**

(71) Demandeur: **SOCIETE DE PROSPECTION ELECTRIQUE**
**SCHLUMBERGER**
**42, rue Saint-Dominique**
**F-75340 Paris Cedex 07(FR)**

(84) Etats contractants désignés:
**FR IT NL**

(72) Inventeur: **Chevalier, Philippe**
**10, Chemin des Vaux Chèvres**
**F-91370 Verrieres Le Buisson(FR)**

(74) Mandataire: **Monod, Jean-Yves et al,**
**Cabinet Netter 40, rue Vignon**
**F-75009 Paris(FR)**

(54) Procédé et dispositif d'analyse des fluides dans un puits par irradiation de photons.

(57) L'invention concerne un procédé pour mesurer l'absorption d'un flux de photons dans le fluide (76) qui s'écoule dans un puits de pétrole, en vue de déterminer la composition du fluide, ainsi qu'une sonde pour la mise en oeuvre de ce procédé.

Le flux de photons produit par une source telle qu'un générateur de rayons X (80), irradie tout le fluide entourant la sonde (60), et l'énergie des photons est inférieure à un seuil déterminé, de préférence 100 kev, de telle sorte que les photons qui arrivent sur les parois (44) du puits sont absorbés en quasi-totalité.

./...

FIG 4

PROCEDE ET DISPOSITIF D'ANALYSE DES FLUIDES DANS UN PUITS
PAR IRRADIATION DE PHOTONS

L'invention concerne l'analyse du fluide s'écoulant dans un puits pétrolier, et plus particulièrement la mesure de l'absorption d'un flux de photons par le fluide, une telle mesure donnant des indications quant à la composition du fluide.

Le brevet US 2.961.539 décrit une sonde pour la détermination de la densité du fluide dans un forage, qui comprend une source de rayonnement gamma et un détecteur de rayonnement placé à une distance donnée de la source, un écran absorbant le rayonnement étant disposé sur le trajet direct de la source au détecteur. Le flux de photons produit par la source irradie par conséquent le fluide entourant la sonde.

Il est souligné dans ce brevet qu'une partie des photons qui viennent frapper le détecteur ont été rétrodiffusés par la formation géologique traversée par le puits. Dans ces conditions, il n'est pas possible d'obtenir une mesure précise.

Pour résoudre ce problème, le brevet précité propose de placer autour de la source et du détecteur un écran tubulaire, par exemple en plomb, pour absorber les photons rétrodiffusés par la formation.

Toutefois, la présence d'un tel écran aboutit à créer un canal d'écoulement secondaire séparé de l'écoulement principal, seul l'écoulement secondaire étant soumis à la mesure. Or la composition du flluide dans ce canal peut différer de la composition dans l'écoulement principal. C'est notamment le cas dans les puits inclinés du fait que les différences de densité entre les composants du fluide provoquent une ségrégation de ces composants, si l'on considère une section droite du puits. Ceci fait également obstacle à l'obtention de mesures précises.

Une autre solution, décrite dans le brevet sus-mentionné en référence à la Figure 7 (ainsi que dans les brevets US 3.103.812, 3.123.709, 3.688.115, et les brevets français 1.283.068 et 1.291.856), consiste à mesurer l'absorption du rayonnement gamma sur le trajet direct de la source au détecteur. Cela exige qu'un canal d'écoulement soit créé à l'intérieur de la sonde, et qu'un matériau absorbant les rayonnements gamma entoure le canal d'écoulement. Cette solution présente le même inconvénient qu'indiqué ci-dessus, à savoir que la mesure fournira une information sur un échantillon très limité du fluide du puits, échantillon qui peut ne pas être représentatif de l'écoulement principal en ce qui concerne la composition.

En outre, tous les documents mentionnés ci-dessus assignent comme seul objectif aux mesures d'absorption la détermination de la densité du fluide du puits. Le fluide dans un puits pétrolier est fréquemment un mélange de pétrole et d'eau, généralement d'eau salée. Le pétrole et l'eau ont des densités relativement similaires, par exemple 1, ou un peu plus, pour l'eau et 0,8 pour le pétrole. Ce faible contraste limite la précision sur les résultats obtenus. Par conséquent, si l'on utilise les mesures d'absorption uniquement pour déterminer la densité et qu'on calcule le rapport eau:pétrole à partir de cette densité, la précision sur le résultat obtenu sera médiocre. De plus, aucune indication valable ne peut être tirée des données de densité quant à la salinité, car la variation de la densité en fonction de la salinité est très faible.

Le Certificat d'Inventeur de l'Union Soviétique No. 326.904 décrit une méthode pour déterminer la salinité qui consiste à compléter la mesure d'absorption classique par la détection de la raie de fluorescence X du chlore pour déterminer la proportion de chlore dans l'eau et donc la salinité. Mais cette méthode est inapplicable en pratique car la raie de fluorescence X du chlore se situe à 2,8 kev, bien en dessous du minimum détectable par les détecteurs utilisables dans les sondes de diagraphie, ce minimum étant de l'ordre de 20 kev.

Selon l'invention, on irradie le fluide à l'extérieur de la sonde par un flux de photons dont l'énergie est inférieure à un niveau déterminé, qui est tel que les parois du puits sont capables d'absorber la quasi-totalité des photons arrivant à leur contact. Ce niveau est de préférence de l'ordre de 100 kev.

De cette façon, le volume sur lequel porte la mesure d'absorption est limité au puits, car, aux énergies considérées, les parois du puits jouent le rôle d'écran absorbant les photons, mais d'autre part, ce volume n'est pas limité à une partie du fluide car la totalité du fluide à l'extérieur de la sonde est irradié. La mesure peut donc être considérée comme pleinement représentative du fluide du puits.

Dans une forme de réalisation préférée, on produit un flux de photons ayant un spectre continu au moyen d'un générateur de rayons X.

4

Le générateur de rayons X peut être commandé pour produire un spectre incluant une plage d'énergie basse pour laquelle l'absorption photoélectrique par le fluide est significative, et une plage d'énergie plus élevée pour laquelle la diffusion Thomson est prédominante. Ces plages d'énergie sont centrées de préférence respectivement sur 30 kev et 60 kev. Par une analyse spectrale du flux détecté, on obtient deux mesures relatives pour la première à la plage d'énergie basse et pour la seconde à la plage d'énergie élevée. On peut déduire de ces deux mesures le coefficient d'absorption photoélectrique et la densité du fluide. Connaissant les densités et les coefficients d'absorption photoélectrique des composants du fluide, à savoir de l'eau et du pétrole et la loi de variation dudit coefficient avec la salinité, on peut déterminer non seulement les proportions d'eau et de pétrole mais également la salinité de l'eau. La précision des résultats sera satisfaisante étant donné le contraste élevé entre le pétrole et l'eau en ce qui concerne l'absorption photoélectrique.

Les explications complémentaires et la description d'exemples qui suivent font référence aux dessins annexés dans lesquels :

la figure 1 représente un diagramme d'absorption de photons en fonction de l'énergie de ces derniers;

la figure 2 est un diagramme illustrant les relations entre la densité et une grandeur caractéristique de l'absorption photo-électrique des composés d'un mélange d'hydrocarbures et d'eau salée;

la figure 3 représente schématiquement un puits de pétrole en production, dans lequel on a descendu une sonde de mesure selon l'invention;

la figure 4 illustre schématiquement la construction d'une forme de réalisation d'une sonde selon l'invention;

la figure 5 représente schématiquement le générateur de rayons X de la sonde de la figure 4;

la figure 6 est un diagramme illustrant des spectres d'énergie détectés à partir de l'interaction des photons émis par le générateur de la figure 5 avec différents milieux;

les figures 7 et 8 illustrent deux formes de réalisation de circuits de détection et de traitement de signaux fournis par la sonde de la figure 4;

la figure 9 est un diagramme schématique d'une séquence de fonctionnement de l'outil, selon une forme de mise en oeuvre de celui-ci;

la figure 10 illustre deux spectres d'énergie de photons différents émis successivement par une même source;

la figure 11 est un diagramme en fonction du temps du signal obtenu à l'aide d'une sonde selon une autre forme de mise en oeuvre de l'invention.

On sait qu'un milieu soumis à un flux $\phi_o$ de photons incidents d'énergie donnée absorbe ces photons en fonction de la distance x parcourue, le flux résultant $\phi$ , pouvant être exprimé par la relation :

(1)   $\phi = \phi_o \, e^{-\mu_t x}$

Dans cette relation, $\mu_t$ est un coefficient d'atténuation totale, qui varie avec la nature du milieu traversé et le niveau d'énergie de la radiation incidente.

Dans le domaine des radiations d'énergie inférieures à 150 kev, le flux résultant est influencé par trois phénomènes physiques distincts, l'effet Thomson (diffusion cohérente), l'effet Compton (collision avec perte d'énergie) et l'effet photo-électrique. Les parts respectives de ces différents phénomènes varient avec le niveau d'énergie de la radiation incidente. On peut définir pour chacun d'eux, à un niveau d'énergie donné, des coefficients respectifs $\mu_p$ pour l'absorption photo-électrique, $\mu_s$ pour la diffusion résultant des effets Thomson et Compton, et $\mu_a$ pour l'absorption Compton tels que :

$$(2) \qquad \mu_t = \mu_p + \mu_s + \nu_a$$

Pour un milieu donné, caractérisé par sa densité massique et le rapport Z/A de son numéro atomique et de sa masse atomique, l'influence respective des facteurs qui influencent la propagation de la radiation à travers le milieu peut être définie par la relation :

$$(3) \qquad \mu_t = N \, \frac{Z}{A} \, \rho \, (\sigma_p + \sigma_s + \sigma_a)$$

dans laquelle N est le nombre d'Avogadro et $\sigma_p$, $\sigma_s$, et $\sigma_a$ sont les sections efficaces du milieu pour l'énergie des photons incidents considérée, et la densité massique $\rho$ est reliée à la densité électronique $\rho_e$ du milieu par la relation :

$$\rho_e = \frac{(Z)}{A} \, \rho$$

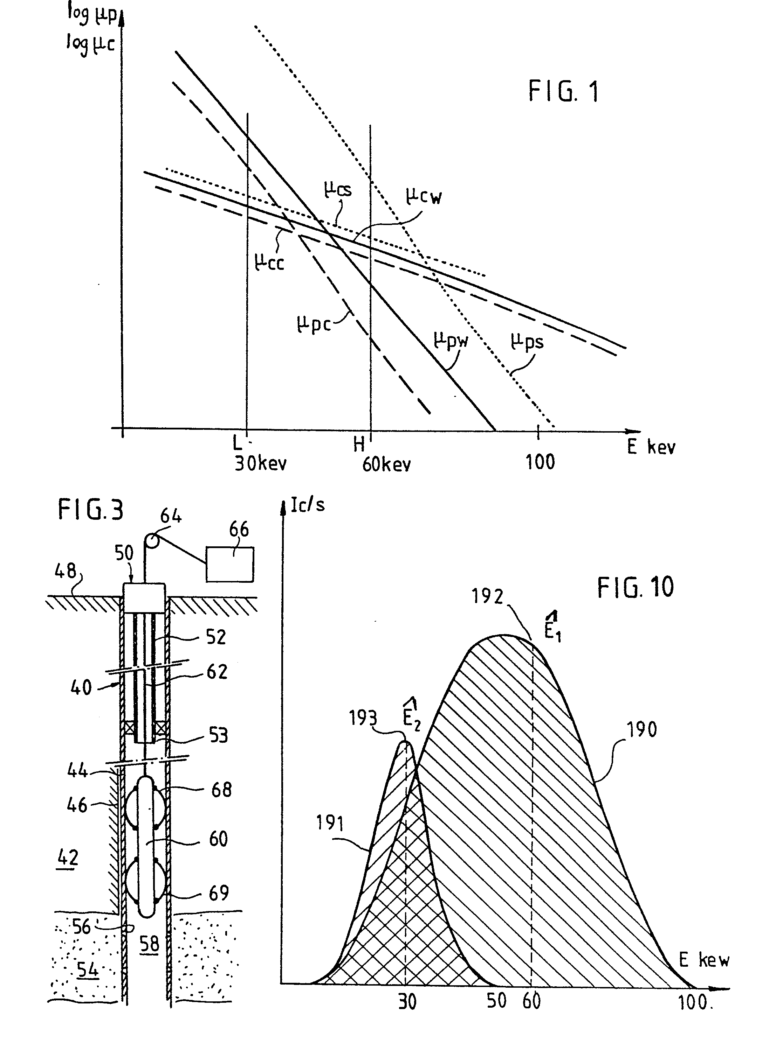

Sur la figure 1, on a représenté un diagramme illustrant très schématiquement les contributions respectives sur le flux résultant $\phi$ de l'absorption photo-électrique $\mu_p$ d'une part et de la combinaison des autres effets représentée

par un coefficient $\mu_c = \mu_s + \mu_a$, d'autre part, en fonction de l'énergie E des photons incidents mesurés en kev.

Dans le cas où le milieu d'interaction est de l'eau (courbes en traits pleins), on constate par exemple que la part de l'absorption photo-électrique $\mu_{pw}$, est faible par rapport aux autres effets dans le domaine des énergies relativement élevées. Comme avec la plupart des autres composés chimiques, l'influence de l'effet photo-électrique ne commence à devenir sensible que dans un domaine d'énergie des photons incidents inférieur à 100 kilos électron-volts.

La figure 1 illustre la décroissance très forte de l'absorption photo-électrique portée en échelle logarithmique au fur et à mesure de l'augmentation d'énergie des photons incidents, cette absorption variant approximativement en fonction inverse du cube de l'énergie incidente.

Au contraire, dans le même domaine des énergies inférieures à 100 kilos électron-volts, le coefficient $\mu_{cw}$ varie beaucoup plus faiblement en fonction de l'énergie des photons incidents.

La figure 1 représente également la variation des absorptions photo-électriques $\mu_{pc}$ du carbone (courbes en tirets) et $\mu_{ps}$ de l'eau saturée en sel (courbe en pointillé). On a également montré schématiquement les variations de $\mu_{cc}$ pour le carbone (courbe en tirets) et $\mu_{cs}$ (courbe en pointillé) pour le sel.

D'une façon générale, à un niveau d'énergie donnée, les effets d'interaction Thomson et Compton, représentés par le coefficient $\mu_c$, varient linéairement avec le numéro atomique Z des éléments composant le mélange, c'est-à-dire avec la densité électronique de ce milieu, tandis que l'absorption photo-électrique varie comme la puissance 4,6 de ce numéro atomique. On peut caractériser l'absorption photo-électrique d'un milieu à une énergie donnée par un coefficient U mesuré en $g.cm^{-1}$ et défini par la relation :

(4)             $U = 10 \, \rho \, \sigma_p$

- $\sigma_p$ étant la section efficace photo-électrique en barns par électron pour l'énergie de 60 kev (on rappelle que le barn est une unité de surface égale à $10^{-24} cm^2$); et

- $\rho$ la densité en grammes par cm3.

Ainsi, à 60 kev, le coefficient d'absorption photo-électrique est $\mu_p = N \frac{Z}{A} U$ . Pour une autre valeur de l'énergie des photons incidents, on peut exprimer le coefficient d'absorption totale sous la forme :

(5)             $\mu_t = N \frac{Z}{A} ( \alpha U + \beta \rho)$

dans lequel $\alpha$ et $\beta$ sont des coefficients qui dépendent essentiellement de l'énergie des photons incidents.

U et $\rho$ sont des paramètres caractéristiques du milieu considéré ainsi que Z/A.

Le tableau I ci-après donne la valeur de ces paramètres pour un certain nombre de composés tels que l'eau, l'eau saturée de sel, et différents composés hydrocarbures liquides, etc...

TABLEAU I

| | ρ | U | Z/A |
|---|---|---|---|
| Eau | 1 | 0,358 | 0,555 |
| ClNa | 2,165 | 10,078 | 0,479 |
| Eau saturée de sel | 1,19 | 1,715 | 0,536 |
| Soufre | 2,070 | 11,240 | 0,499 |
| Brut de Mer du Nord | 0,84 | 0,108 | 0,576 |
| Brut de Koweit | 0,87 | 0,223 | 0,574 |
| Brut D'Hassi Messaoud | 0,80 | 0,100 | 0,576 |
| Brut du Nigeria | 0,89 | 0,116 | 0,576 |
| Brut du Gabon | 0,87 | 1,138 | 0,576 |

Alors que le contraste entre la densité de l'eau d'une part et celle des différents pétroles bruts mentionnés dans ce tableau est de 1 à 0,8 ou à 0,9, on vérifie que le coefficient U présente un contraste très supérieur entre l'eau d'une part et ces différentes variétés de pétrole. Ce contraste est en effet de 3 environ, sauf dans le cas du pétrole brut de Koweit où il est de 2 environ.

Une mesure en combinaison avec la densité, d'un coefficient caractéristique de l'absorption photo-électrique d'un milieu à analyser, tel que par exemple celui du coefficient U, fournira donc un moyen de détecter avec une très bonne précision les porportions des composés respectifs d'un mélange, par exemple de pétrole et d'eau.

Conformément au procédé décrit ci-après, on mesure l'absorption totale de radiations de photons incidents à au moins deux niveaux d'énergie différents. L'une de ces mesures est faite à un niveau d'énergie de photons suffisamment bas pour que l'absorption photo-électrique joue un rôle significatif dans le milieu étudié. On combine les résultats de ces deux mesures pour en tirer une grandeur caractéristique de l'absorption photo-électrique et un paramètre caractéristique de la densité du milieu observé.

L'utilisation pour de telles mesures d'une fourchette d'énergie relativement basse est particulièrement avantageuse dans les puits de pétrole en production. En effet, à ces niveaux d'énergie et notamment à des niveaux inférieurs à 100 kev, la mesure d'absorption dans le puits est très peu affectée par l'existence du milieu environnant les fluides à analyser, notamment le tubage en acier (casing), le ciment et la formation géologique traversée par le puits. L'absorption photo-électrique de l'acier étant extrêmement élevée, pratiquement tous les photons incidents qui entrent en contact avec cet environnement sont absorbés. Aucune radiation en provenance de la formation ne se produit vers les détecteurs placés dans le fluide. A titre d'exemple, on montre que pour une énergie de photons incidents de 50 kev dans du fer, le libre parcours moyen : ( $\ell = \frac{1}{\mu_\rho}$ ) des photons est de $\ell$ = 0,6 millimètre. A 100 kev, cette valeur est de $\ell$ = 3,3 millimètres, comparée à des épaisseurs courantes de tubage de 10 mm.

Ainsi, les mesures obtenues ne sont pas affectées par des variations d'épaisseurs du tubage ou autres facteurs dépendants de l'environnement du puits dans lequel s'écoule le fluide mesuré.

Le faible niveau énergétique des photons utilisés pour la mesure conformément à l'invention n'est cependant pas un obstacle à la précision de celle-ci. On pourrait craindre en effet que le flux de photons détectés pour la mesure après interaction avec le milieu étudié dans les bandes d'énergie sélectionnées ne soit difficilement exploitable en raison d'une trop grande dégradation énergétique due notamment à une forte absorption Compton.

En réalité, on a déterminé qu'aux niveaux d'énergie considérés, l'absorption Compton tient une relativement faible place et la majeure partie de l'énergie détectée, c'est-à-dire non absorbée par effet photo-électrique est diffusée par effet Thomson, c'est-à-dire sans diminution d'énergie des photons résultant par rapport à l'onde incidente. Pour une énergie de photons incidents de 50 kev, dans de l'eau pure par exemple, la perte d'énergie contenue dans le faisceau incident en raison des collisions Compton, ne représente que 8% du total de l'énergie diffusée. En conséquence, les flux de photons captés après interaction avec le milieu étudié dans les deux tranches d'énergie sélectionnées et notamment dans la plus basse sont suffisants pour permettre d'effectuer une mesure précise, condition indispensable de la réussite de la méthode selon l'invention.

L'obtention des grandeurs U et $\rho$ à partir de deux mesures à deux niveaux d'énergie différents des photons incidents est permise par le fait que l'absorption photo-électrique d'une part, et les effets d'interaction Compton et Thomson, d'autre part, obéissent à des lois de variation très différentes (voir figure 1) en fonction de l'énergie des photons incidents permettant d'effectuer une détermination précise de ces grandeurs.

Si l'on se réfère à la relation (5), on peut obtenir une mesure des grandeurs U et $\rho$ en mesurant l'atténuation des flux de photons par interaction avec le fluide à analyser sur une distance prédéterminée dans deux tranches d'énergie sélectionnées distinctes, l'une de ces tranches correspondant à un niveau d'énergie élevé et l'autre à un niveau d'énergie relativement plus faible. A titre d'exemple, on peut effectuer une première mesure de flux de photons détectés après leur interaction avec le mélange à analyser dans une tranche d'énergie, dite basse, centrée sur 30 kev et une deuxième mesure dans une tranche d'énergie, dite haute, centrée sur 60 kev.

Selon une forme de réalisation, on irradie le mélange à étudier à l'aide d'une source de type "chimique" comprenant un isotope radio-actif qui émet au moins deux raies d'énergie monochromatiques dont l'une au moins est située dans une plage d'énergie relativement basse, inférieure à 100 kev. Plusieurs sources existent qui répondent à ces conditions, par exemple le Baryum 133 qui fournit des photons à deux niveaux d'énergie respectivement de 36 kev et 81 kev, ou l'Américium Am 241.

On peut également choisir d'irradier le mélange à étudier

0069679

à l'aide de photons dont le spectre énergétique est connu et couvre une plage d'énergie relativement large. On mesure l'atténuation des photons après interaction avec le milieu sur une distance déterminée, dans deux tranches d'énergie distinctes à l'intérieur du spectre d'énergie incident.

On peut avantageusement utiliser un tube à rayons X pour irradier le mélange à analyser. On peut alors effectuer une mesure dans deux tranches d'énergie distinctes à l'intérieur du spectre d'émission de ce tube pour une valeur donnée de sa tension d'accélération.

Une source de photons modulable en énergie telle qu'un générateur de rayons X peut aussi être utilisée pour faire varier dans le temps le spectre des photons émis et effectuer des mesures successives de l'atténuation des photons pour les différentes énergies émises en vue de l'obtention des grandeurs $\dot{U}$ et $\rho$.

En particulier, on peut faire varier, par exemple, l'énergie moyenne des photons émis de façon continue entre un premier et un deuxième niveau extrêmes par modulation sinusoïdale de la tension d'accélération d'un tube à rayons X. Le flux de photons résultant est alors modulé sinusoïdalement entre deux valeurs extrêmes correspondantes dont l'écart est essentiellement fonction de l'absorption photo-électrique des photons par le milieu analysé. La valeur moyenne de ce flux résultant dépend quant à elle essentiellement de la densité du milieu. On peut tirer de l'analyse de ce signal des informations sur U et $\rho$.

Si on filtre par exemple le signal de mesure du flux de photons résultants, l'amplitude de sa composante sinusoïdale peut fournir une mesure du coefficient d'absorption photo-électrique U et le niveau de la composante continue peut fournir une mesure de la densité.

Les valeurs U et $\rho$ permettent de déterminer la composition d'un mélange ternaire, par exemple un mélange d'eau et d'un hydrocarbure liquide en présence d'un troisième constituant.

Ainsi, dans un mélange triphasique huile, eau, gaz, comprenant des pourcentages $v_1$, $v_2$ et $v_3$ respectivement d'eau, de pétrole et de gaz tels que $v_1 + v_2 + v_3 = 1$, il est possible de déterminer les valeurs $v_1$, $v_2$, $v_3$ en utilisant le système d'équations :

$$(7) \qquad \rho = \rho_w \, v_1 + \rho_h \, v_2 + \rho_g \, v_3$$

$$U = U_w \, v_1 + U_h \, v_2 + U_g \, v_3$$

$$1 = v_1 + v_2 + v_3$$

Dans ces équations, $\rho$ et $U$ sont les valeurs issues de la mesure, $\rho_w$, $\rho_h$, $\rho_g$ sont les densités respectives de l'eau et des hydrocarbures liquides et gazeux en présence qui peuvent être obtenues, par exemple, à l'aide du tableau I, de même que $U_w$, $U_h$ et $U_g$ sont les valeurs de U dans ces mêmes corps. Si la pression des hydrocarbures gazeux est faible, les valeurs de $\rho_g$ et $U_g$ peuvent être négligées.

La présence de sel dans l'eau tend à accroître le contraste entre l'absorption photo-électrique de l'eau et celle du pétrole. Cette observation peut être mise à profit si l'on connaît par une autre méthode la salinité de l'eau du mélange. Celle-ci peut être obtenue par exemple par une mesure complémentaire effectuée à l'aide d'un autre type d'appareil, ou dans le cas d'un puits de pétrole en production, par la fermeture de celui-ci (shut-in) jusqu'à séparation et stabilisation des phases. On effectue alors une mesure de l'absorption dans le fluide au fond du puits pour obtenir une mesure permettant de déterminer la salinité de l'eau. On peut également effectuer une mesure dans la portion supérieure du puits où s'est rassemblé le pétrole pour déterminer avec précision les grandeurs caractéristiques de densité et d'absorption photo-électrique de celui-ci lorsqu'elles ne sont pas connues.

En l'absence de gaz, la méthode permet de mesurer directement les pourcentages·respectifs de pétrole et d'eau salée et la salinité de l'eau.

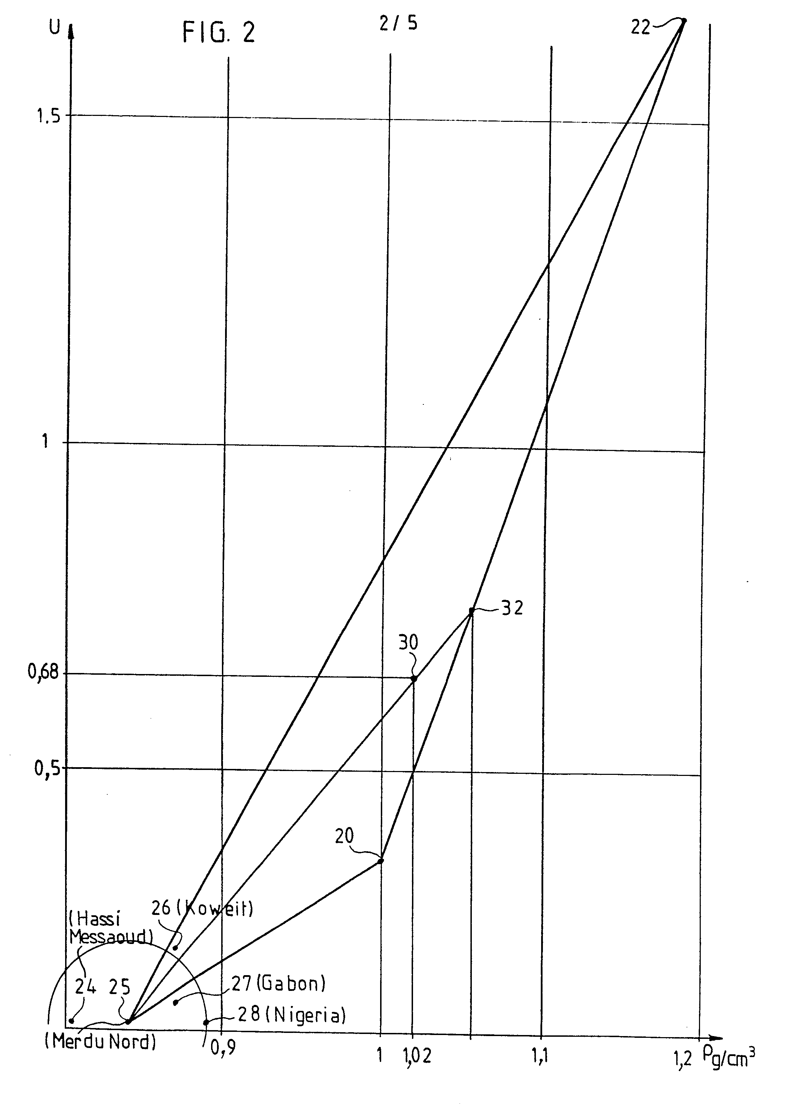

On a porté sur le diagramme de la figure 2, dans un système de coordonnées comprenant la densité en abscisse et la grandeur U en ordonnée, un point 20 dont les composants correspondent aux valeurs de $\rho$ et de U pour l'eau pure. On a également porté sur ce diagramme en haut à droite de la figure, un point 22 dont les coordonnées sont caractéristiques d'une eau saturée de sel.

En bas à gauche du diagramme de la figure 2, sont portés plusieurs points 24 à 28 correspondant chacun aux valeurs de $\rho$ et de U d'un pétrole brut en provenance d'une des régions du globe indiquées dans le tableau I.

Les divers constituants d'un mélange influencent les mesures de densités et de grandeurs d'absorption photo-électrique U linéairement en proportion de leur teneur dans le mélange. Ainsi, toute mesure effectuée dans un mélange de brut de la Mer du Nord (point 25) et d'eau salée conduit à un point représentatif des valeurs $\rho$ et U mesurées tel que le point 30 situé à l'intérieur d'un triangle représenté en trait plein et dont les sommets sont constitués par les points 20, 22 et 25.

Si l'on appelle V la teneur en eau salée,(1-V) la teneur en huile, et S le poids de sel dans l'eau en kilogramme par litre de solution, les valeurs de V et S peuvent être obtenues à partir des relations (8) dans lesquelles les densités sont exprimées en gramme par centimètre cube (densité de l'eau pure $\rho_w = 1$) :

$$\rho = \rho_h ( 1 - V) + (1 - \frac{S}{0,3} ) V + \rho_{sw} \frac{S}{0,3} V$$

(8)

$$U = U_h (1-V) + U_w (1-\frac{S}{0,3}) V + U_{sw} \frac{S}{0,3} V$$

Dans ces relations, $\rho$ et U sont les mesures effectuées,

$\rho_h$ et $U_h$ sont les coordonnées du point de pétrole brut (point 25 dans l'exemple de la figure 2), $U_w$ , $\rho_w$ les ordonnées du point 20, soit : $U_w = 0,358$ et $\rho_w = 1$ et $\rho_{sw}$ et $U_{sw}$ sont les coordonnées du point 22.

On décrit maintenant une sonde de diagraphie propre à être descendue dans un puits en vue de l'analyse du fluide du puits.

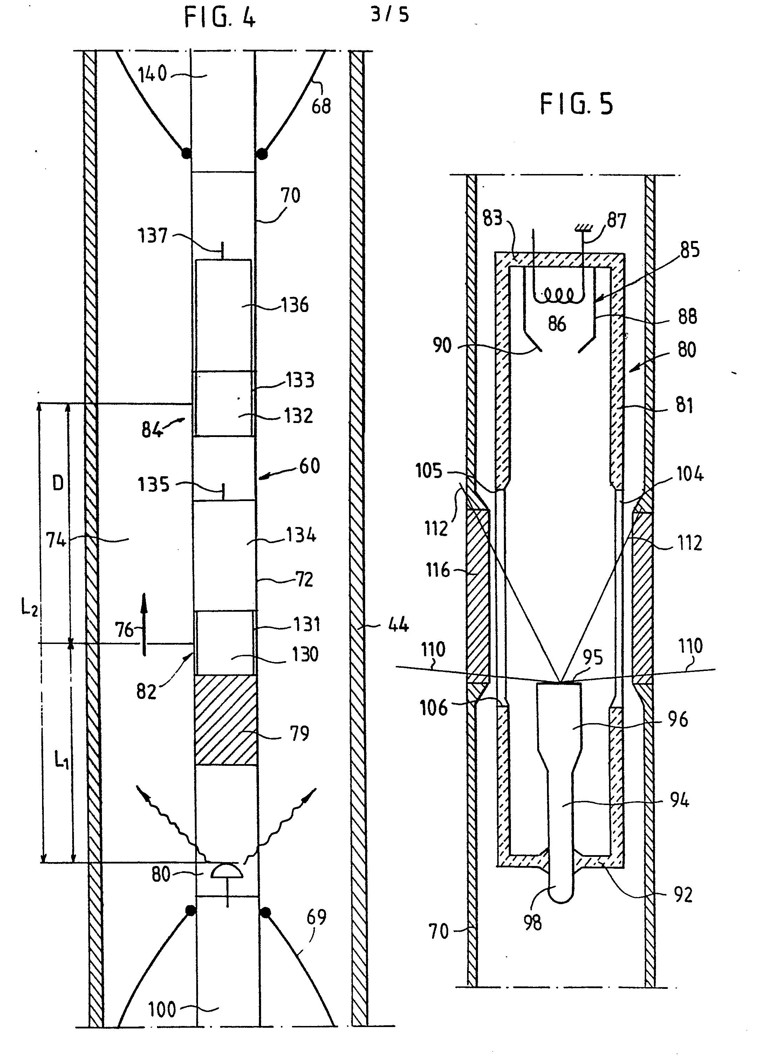

Un puits de pétrole 40 (figure 3) traverse, verticalement dans cet exemple, les formations géologiques 42. Le puits est délimité par un tubage (casing) 44 en acier. L'intervalle entre le tubage 44 et la formation 42 est rempli d'un ciment 46 destiné à éviter toute circulation verticale de fluide à la partie extérieure du tubage. Ce tubage débouche à la surface 48 du sol. Une tête de puits schématiquement représentée en 50, obture la partie supérieure du tubage et permet le contrôle de l'écoulement des fluides à l'intérieur d'une colonne de production 52 montée coaxialement à l'intérieur du tubage 44 jusqu'à une profondeur voisine de celle d'une couche productrice de fluide 54. Un bouchon (packer) est installé entre l'extrémité 53 de la colonne de production et le tubage pour isoler la couche productrice 54. Au niveau de cette dernière, le tubage est perforé d'ouvertures 56 permettant l'écoulement des fluides produits à l'intérieur 58 du tubage pour leur ascension verticale à travers la colonne de production 52 jusqu'à la surface.

Afin de connaître les régimes d'écoulement des fluides, leur composition et, d'une façon générale, de surveiller la production de la couche 54, il est usuel de descendre à travers la colonne de production 52 des sondes de diagraphie permettant d'effectuer les mesures appropriées. Une telle sonde 60 est représentée dans l'espace séparant l'extrémité inférieure de la colonne de production 52 et les perforations 56. Elle est suspendue à l'extrémité d'un câble 62 qui passe en surface sur une poulie 64 à la tête du puits pour rejoindre une unité opérationnelle 66 à partir de laquelle le câble peut être enroulé ou déroulé. Le câble 62, outre la suspension mécanique de la sonde 60, assure les connexions électriques nécessaires entre la sonde et l'unité opérationnelle 66.

Le diamètre de la sonde 60 est suffisamment petit pour permettre son passage à l'intérieur de la colonne de production 52 de plus petit diamètre et est par exemple 43 millimètres (1 pouce et 11/16èmes). Elle est équipée de dispositifs de centrage à ressorts supérieur 68 et inférieur 69 qui permettent de la maintenir dans une position sensiblement axiale à l'intérieur du tubage 44 au sortir de la colonne de production 52 au-dessus des perforations 56.

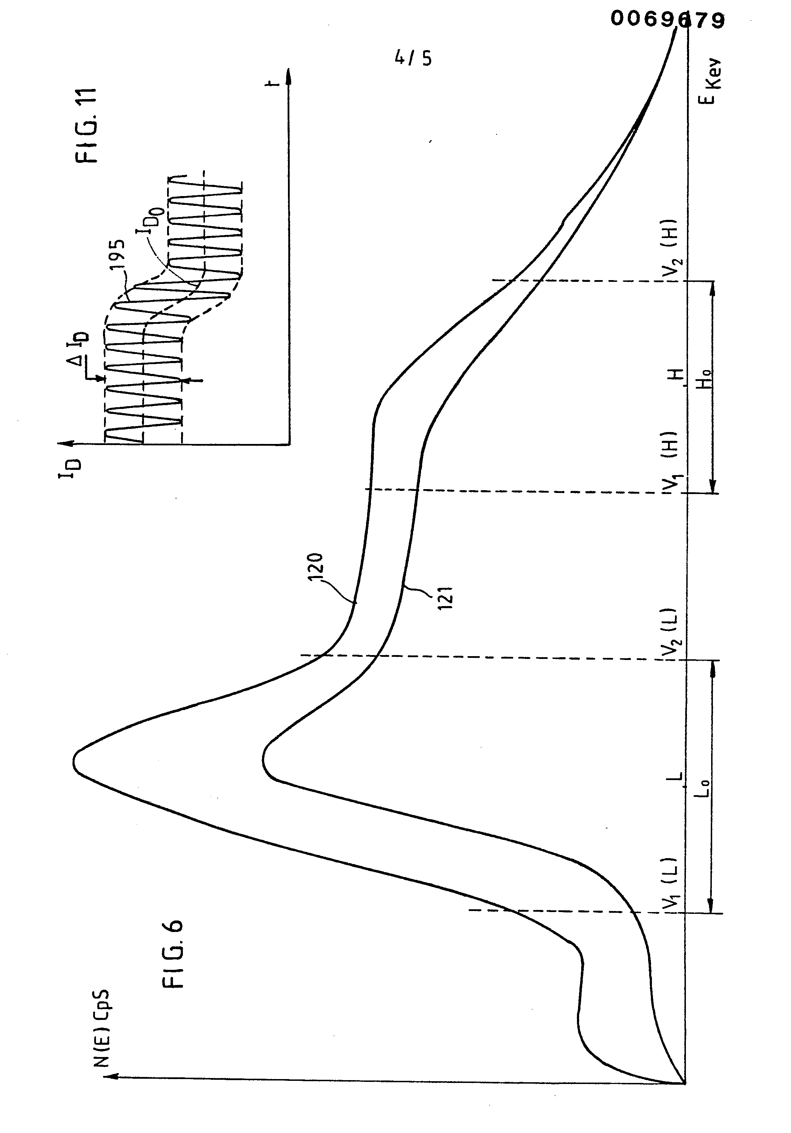

La sonde 60 se présente sous la forme d'un mandrin allongé entouré par une gaîne tubulaire schématiquement représentée en 70 (figures 4 et 5) propre à résister aux efforts mécaniques et chocs auxquels peut être soumise la sonde ainsi qu'à la pression des fluides et à la température régnant au fond du puits. Entre les ressorts de centrage supérieur et inférieur 68 et 69, la gaîne de la sonde présente une portion moyenne 72 dépourvue d'aspérités ou autres irrégularités qui définit avec le tubage 44 l'intervalle annulaire 74 dans lequel peut s'établir un écoulement ascendant, stable des fluides de production dans le sens de la flèche 76, dont la composition est perturbée au minimum par la présence de la sonde.

Vers l'extrémité inférieure de cette partie moyenne 72 de la gaîne 70, la sonde 60 comprend un dispositif émetteur de rayons X 80. Au-dessus et à une première distance prédéterminée $L_1$ de l'émetteur 80 est monté un premier récepteur 82. Un deuxième récepteur 84 est prévu à une deuxième distance prédéterminée $L_2$ de l'émetteur 80 supérieure à la première distance. Un écran 79 opaque aux rayons X est disposé entre le générateur 80 et le détecteur 82.

Le générateur de rayons X 80 (figure 5) comprend une enceinte allongée 81 hermétiquement fermée et logée à l'intérieur de la gaîne 70. A l'intérieur de l'enceinte 81, règne un vide convenable pour permettre la génération de rayons X par bombardement électronique d'une cible. A l'une des extrémités 83 de l'enceinte 81 est monté un dispositif de cathode 85 comprenant notamment un filament 86 dont une extrémité 87 est connectée à la masse de l'outil. Ce filament est entouré d'une électrode (Wehnelt) qui peut permettre le réglage en intensité du flux de rayons X.

A l'extrémité opposée, la paroi 92 de cette enceinte 81 est traversée coaxialement par une anode massive 94 dont une extrémité élargie 96 se termine par un plateau 95 perpendiculaire à son axe. Ce plateau forme la cible génératrice du rayonnement X pour le faisceau électronique produit par la cathode 86 et focalisé par l'électrode 88 lorsque l'extrémité 98 de l'anode 94 extérieure à l'enceinte 81 est alimentée par une haute tension continue positive produite par un générateur 100 (figure 4) d'environ 10 watts logé à l'intérieur de la gaîne 70 en dessous de l'émetteur 80. Ce générateur est alimenté à partir de la surface en courant alternatif par deux conducteurs à l'intérieur du câble 62 et peut produire une haute tension continue pouvant être modulée et s'élever jusqu'à une valeur d'environ 100 kilovolts avec un courant d'environ 100 micro-ampères, voire 150 kilovolts en fonction des besoins.

L'enceinte tubulaire 81 comprend dans sa partie intermédiaire une fenêtre cylindrique 104 en béryllium raccordée de façon hermétique par des joints circulaires 105 et 106 aux extrémités respectivement supérieure et inférieure de l'enceinte 81 (qui sont constituées, dans cet exemple, en verre ou en céramique).

Dans la position opérationnelle représentée aux dessins, le joint inférieur 106 de la fenêtre en béryllium 104 est situé dans un plan inférieur au plan du plateau 95. Elle laisse ainsi passer le rayonnement X produit dans des directions pratiquement tangentielles au plan de ce plateau, telles que la direction 110. Sa hauteur est suffisante pour permettre la sortie des radiations produites par la cible 95 dans un angle solide d'environ 75°, pour former un faisceau de révolution autour de l'axe du tube schématiquement délimité dans le plan de la figure 5 par les lignes 110 et 112.

Face à la fenêtre 104, la gaîne 70 comporte une fenêtre cylindrique en béryllium épais 116 dont la dimension axiale est suffisante pour permettre le passage du faisceau délimité par les cônes de traces 110 et 112. L'épaisseur de cette fenêtre est déterminée pour lui permettre de résister à des pressions de 1400 bars et des températures de 175°. Elle est recouverte sur sa face externe d'une couche d'époxy dans un but de protection.

Le générateur de rayons X 80 permet de produire un flux de sortie de photons d'énergies égales ou supérieures à 20 kev supérieur à $10^{11}$ photons par seconde dans un encombrement compatible avec les conditions d'utilisation dans un outil de diagraphie. Dans un exemple de réalisation, le diamètre de l'enceinte 81 est légèrement inférieur à 3 centimètres, et la distance anode cathode sur laquelle sont accélérés les électrons étant inférieure à 10 centimètres.

On a représenté par les courbes 120 et 121 de la figure 6 les spectres d'énergie des photons reçus par l'un des détecteurs, après interaction respectivement avec un pétrole pur d'une part et de l'eau salée d'autre part, pour une tension d'alimentation constante du générateur s'élevant à 100 kev. Ces courbes définissent le taux de réception respectif des photons représenté en nombre de comptes par seconde en ordonnée en fonction de leur énergie en kilos électron-volt en abscisse. Ces spectres continus s'étendent entre une valeur inférieure légèrement en dessous de 20 kev, limite de transmission des fenêtres de béryllium 104 et 116, jusqu'à une valeur d'énergie maximale de 100 kev.

Chacun des récepteurs 82 et 84 comprend (figure 4) un détecteur à scintillation respectivement 130 et 132 constitué par un cristal d'iodure de sodium logé à l'intérieur d'un compartiment respectif délimité le long de la gaîne 70 par une fenêtre de béryllium respective 131 et 133 (figure 4) dont les spécifications sont analogues à celles de la fenêtre 116 du générateur 80.

Les récepteurs 82 et 84 comprennent chacun un photomultiplicateur, respectivement 134 et 136 connecté aux sorties des détecteurs 130 et 132. Les sorties 135 et 137 des photomultiplicateurs 134 et 136 sont reliées par des conducteurs non représentés à une cartouche de traitement des signaux 140 disposée à la partie supérieure de la sonde au-dessus du deuxième récepteur 84.

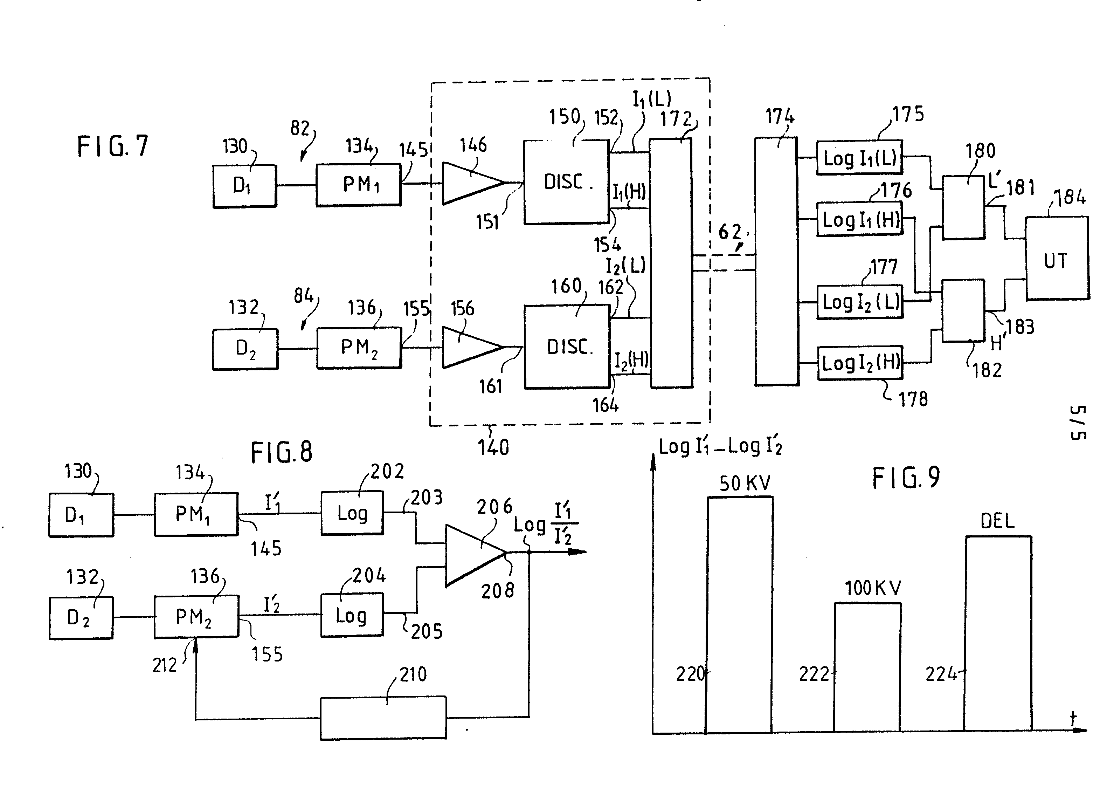

Sur la figure 7, on a représenté schématiquement un circuit de traitement à la sortie des récepteurs 82 et 84. Chaque impulsion à la sortie 145 du photomultiplicateur 134 a une amplitude proportionnelle à l'énergie du photon détecté par le détecteur 130. Cette impulsion est mise en forme par un pré-amplificateur 146.

Après mise en forme par le pré-amplificateur 146, les impulsions sont appliquées à l'entrée 151 d'un discriminateur de tension 150. Ce discriminateur possède deux sorties 152 et 154. Sur la sortie 152 apparaît un signal $I_1$ (L) proportionnel au nombre de photons captés par seconde par le détecteur 130 dans une tranche d'énergie "basse" autour de 30 k-électron-volts représentée par L sur la figure 6. La sortie 154 du discriminateur 150 produit un signal $I_1$ (H) d'amplitude proportionnelle au taux de comptage des photons captés par le récepteur 82 dans une bande d'énergie étroite "haute" centrée sur 60 kilo électron-volts, représentée par la lettre H sur la figure 6. A cet effet, le discriminateur 150 comprend une batterie de comparateurs de tension dont les niveaux $V_1$ (H), $V_2$ (H) d'une part et $V_1$(L) et $V_2$(L) d'autre part (voir figure 6) définissent deux plages de tension correspondant respectivement aux tranches d'énergie haute et basse des photons reçus. A la sortie de chaque couple de comparateurs est prévu un compteur d'impulsions reçues dans la plage de tension considérée qui délivre les signaux $I_1$ (H) et $I_1$ (L) pour être transmis par le câble à l'instrumentation de surface.

De la même façon, la sortie 155 du photomultiplicateur 136 est connectée par un pré-amplificateur 156 à l'entrée 161 d'un discriminateur 160 qui délivre sur ses sorties 162 et 164 respectivement deux signaux $I_2$ (L) et $I_2$ (H) correspondant respectivement au comptage des photons reçus dans la tranche d'énergie $L_o$ et dans la tranche d'énergie $H_o$.

Les signaux de sortie des discriminateurs 150 et 160 sont transmis à un codeur 172 avant d'être envoyés par le système de télémesure le long du câble 62 à un décodeur 174 appartenant à l'instrumentation de surface. Cette instrumentation est adaptée à produire une mesure de l'atténuation des pho-tons dans les tranches $L_o$ et $H_o$ sur la distance D séparant les récepteurs 82 et 84.

Très schématiquement, on a représenté sur la figure 7 les fonctions de cette instrumentation par quatre amplificateurs logarithmiques 175 à 178 qui produisent des signaux de sortie représentatifs des grandeurs Log $I_1$ (L), Log $I_1$ (H), Log $I_2$ (L) et Log $I_2$ (H) respectivement. Ces signaux sont soustraits deux à deux dans des circuits 180 et 182 qui délivrent sur leurs sorties respectives 181 et 183 des signaux L' et H' transmis à l'entrée d'une unité de traitement 184.

En fonctionnement, des radiations émises par le générateur X 80 selon un spectre continu interagissent avec le fluide remplissant l'espace annulaire entre la sonde 60 et le tubage sur une distance $L_1$ entre le générateur 80 et le premier détecteur 130 d'une part, et sur une distance $L_2$ séparant ce générateur 80 du deuxième détecteur 132 d'autre part.

L'intensité du rayonnement capté par chacun des récepteurs 82 et 84 dans une tranche d'énergie déterminée dépend du flux de photons incidents absorbés par le milieu étudié dans cette tranche. Pour chacun des premier et deuxième récepteurs 82 et 84, l'intensité respective $I_1$ et $I_2$ dans cette tranche d'énergie peut être exprimée par la relation :

$$(9) \qquad I_1 = I_o \; \Omega_1 \; \rho \; e^{- \mu_t \; L_1}$$

$$I_2 = I_o \; \Omega_2 \; \rho \; e^{- \mu_t \; L_2}$$

$$D = L_2 - L_1$$

Dans cette relation, $I_o$ est l'intensité qui correspondrait à une atténuation d'interaction nulle, $\Omega_1$ et $\Omega_2$ sont des constantes caractéristiques du premier et du deuxième récepteurs, D est la distance entre les deux récepteurs.

Dans l'exemple considéré, les distances L1 et L2 sont respectivement de 0,12 m et 0,32 m.

Après discrimination des photons reçus dans les deux tranches d'énergie distinctes, haute et basse, L et H, le calcul effectué par l'instrumentation de surface fournit :

$$(10) \qquad H' = Log \; \frac{I_1 \; (H)}{I_2 \; (H)} = k + \mu_t (H) \times D$$

$$L' = Log \; \frac{I_1 \; (L)}{I_2 \; (L)} = k + \mu_t (L) \times D$$

dans lesquelles k est une constante.

La présence de deux détecteurs fournissant chacun une intensité $I_1$ et $I_2$ dans chaque tranche d'énergie permet d'obtenir des rapports H' et L' qui sont indépendants des fluctuations du flux de photons incidents sur le milieu étudié dues à des instabilités éventuelles du générateur de rayons X. On a vu en effet que les flux reçus par chacun des deux détecteurs dans chaque tranche d'énergie sont directement proportionnels aux flux incidents. Les signaux H' et L' sont représentatifs de l'atténuation du flux de photons dans la tranche d'énergie correspondante sur la distance D dans le milieu analysé.

Si l'on se réfère à l'expression (5), on remarque que les signaux H' et L' sont directement reliés à la grandeur caractéristique d'absorption photo-électrique U et à la densité massique $\rho$ .

En établissant une correspondance entre des grandeurs $H_1$ et $L_1$ et H' et L', selon la relation suivante :

$$(11) \quad H_1 = \frac{A}{Z} (k' - H')$$
$$L_1 = \frac{A}{Z} (k'' - L')$$

où k' et k" sont des constantes, la relation entre les signaux obtenus en sortie du circuit de la figure 7 et les grandeurs U et $\rho$ peut s'exprimer sous la forme :

$$(12) \quad H_1 = ( \alpha U + \beta \rho ) D$$
$$L_1 = ( \alpha' U + \beta' \rho) D$$

Les coefficients $\alpha$, $\beta$, $\alpha'$ et $\beta'$ dépendent de la tranche d'énergie considérée et de l'énergie moyenne du spectre émis par le générateur X 80. Ils peuvent être déterminés par étalonnage.

En partant de l'observation fournie par le tableau I que la grandeur Z/A varie peu en première approximation selon que le fluide est de l'eau pure, de l'eau salée ou du pétrole, l'unité de traitement 180 détermine en utilisant la valeur de ce rapport dans l'eau pure une première valeur des grandeurs $H_1$ et $L_1$, à partir de laquelle des valeurs de U et $\rho$ peuvent être calculées ou dérivées, comme le montrent les relations (11).

Au début de la mesure, on fournit à l'unité de traitement 180 des données d'entrée concernant les paramètres $U_h$ et $\rho_h$. Ces paramètres peuvent être obtenus, par une connaissance à l'avance de la composition du pétrole produit dans la région et, plus particulièrement, dans le puits et la zone pétrolifère considérée.

Elles peuvent également être obtenues, comme indiqué précédemment, par une mesure préliminaire dans le puits après arrêt de l'écoulement des fluides et stabilisation.

L'unité de traitement est ainsi à même de tirer des valeurs U et $\rho$ précédemment obtenues, une première mesure du rapport V (eau/fluide total) et du poids S de sel par unité de volume d'eau S.

Une mesure plus fine de Z/A peut alors être obtenue à partir de ces valeurs par la relation :

$$(13) \quad \left(\frac{Z}{A}\right)_{mel} = \frac{SV}{\rho} \left(\frac{Z}{A}\right)_{ClNa} + \frac{V}{\rho} \left(\frac{Z}{A}\right)_{H_2O} + \frac{(I-V)}{\rho} \rho_h \left(\frac{Z}{A}\right)_h$$

où $\left(\frac{Z}{A}\right)_{ClNa}$, $\left(\frac{Z}{A}\right)_{H_2O}$ et $\left(\frac{Z}{A}\right)_h$ sont respectivement les valeurs du rapport $\frac{Z}{A}$ du sel pur, de l'eau pure et du pétrole pur, telles qu'elles ressortent par exemple du tableau I.

A partir de cette nouvelle valeur du rapport $\frac{Z}{A}$, l'unité de traitement effectue par itérations successives une détermination précise de S et V.

Les grandeurs U et $\rho$ dépendent de la température et de la pression du fluide, selon des lois connues à partir desquelles l'unité de traitement est programmée pour effectuer les corrections nécessaires.

Dans le mode de réalisation qui vient d'être décrit, la tension d'alimentation du générateur de rayons X 80 reste la même pendant la mesure. Dans ces conditions, le spectre énergétique des photons émis par le tube à rayons X s'étend de façon continue entre 20 kev et 100 kev environ, et la sélection spectrale des photons de basse et haute énergie se fait au niveau des récepteurs 82 et 84 par le sélecteur d'ampli-

tude délimitant les bandes $L_o$ et $H_o$ dans les discriminateurs 150 et 160.

Selon un autre mode de réalisation, on effectue la mesure en modulant l'énergie des photons émis.

Selon une première forme de réalisation, on peut à cet effet opérer le générateur en mode pulsé en l'alimentant par des impulsions de tension de niveaux différents. Ainsi, dans un premier temps, le générateur émet une première impulsion d'énergie relativement élevée d'une durée d'environ 20 ms sous une tension d'alimentation d'environ 100 kV. Le spectre des radiations émises est alors conforme à la courbe 190 de la figure 10. L'énergie moyenne $\hat{E}_1$ de ce spectre est d'environ 60 kev correspondant au point 192 de la courbe 190.

Dans un deuxième temps, on alimente le générateur X 80 sous une tension de 50 kilos volts pour produire une deuxième impulsion d'énergie relativement basse dont le spectre est représenté par la courbe 191 de la figure 10. Le maximum d'intensité de ce spectre correspond sensiblement à une énergie moyenne des photons d'environ $\hat{E}_2$ = 30 kev, comme représenté par le point 193 de la courbe 191.

Au lieu de compter les impulsions produites au cours de chaque fenêtre à la sortie des photomultiplicateurs 134 et 136, on mesure (figure 8) l'intensité totale du rayonnement capté par les détecteurs 130 et 132. En effet, les taux de comptage des détecteurs 130 et 132 étant très élevés, il n'est plus possible de faire une analyse spectrale des photons. La valeur respective des courants $I'_1$ et $I'_2$ respectivement disponibles aux sorties 145 et 155 des photomultiplicateurs est néanmoins représentative des flux de photons correspondant aux énergies $\hat{E}_1$ et $\hat{E}_2$. Les signaux $I'_1$ et $I'_2$ sont directement convertis par des amplificateurs logarithmiques respectifs 202 et 204 dont les sorties sont connectées aux entrées respectives 203 et 205 d'un amplificateur différentiel 206 qui délivre à sa sortie 208 un signal proportionnel à

$Log \dfrac{I'_1}{I'_2}$ pendant la durée de chaque impulsion haute et basse énergie. Les signaux H' et L' apparaissant successivement à la sortie 208 en correspondance des impulsions à haute et basse énergie sont transmis en surface pour traitement.

Afin de compenser d'éventuelles dérives de gain des photomultiplicateurs et des amplificateurs logarithmiques, on prévoit d'utiliser une diode électroluminescente non représentée qui est reliée à l'entrée de chacun des deux photomultiplicateurs 134 et 136 par des fibres optiques à l'intérieur de la gaîne 70.

La tension d'alimentation du photomultiplicateur 136 est ajustée par un circuit 210 branché entre la sortie 208 de l'amplificateur différentiel 206 et une entrée 212 de commande de la haute tension du photomultiplicateur 136 de façon à maintenir la fonction $Log \dfrac{I'_1\ ref}{I'_2\ ref}$ des courants $I'_{1ref}$ et $I'_{2ref}$ obtenus, respectivement aux sorties 145 et 155 des photomultiplicateurs en réponse à une impulsion lumineuse de référence produite par la diode électroluminescente constante pendant les périodes d'obscurité du générateur 80.

On a représenté schématiquement sur la figure 9 les niveaux de signaux impulsionnels 220, 222 et 224 à la sortie 208 en fonction du temps, en réponse respectivement à une première impulsion d'énergie émise à "basse" tension puis à une deuxième impulsion d'énergie émise à "haute" tension, puis à l'impulsion d'excitation de la diode de référence. Chacune de ces impulsions a une durée d'environ 20 ms. Elles sont séparées par des intervalles d'obscurité d'environ 20 ms, pour une durée totale de la séquence d'environ 100 ms.

L'alimentation du générateur X en mode pulsé présente l'intérêt de limiter la dissipation de puissance du tube. Elle permet également de réduire l'influence des courants d'obscurité des photomultiplicateurs 134 et 136 à haute température, c'est-à-dire des courants en l'absence de radiation sur les détecteurs 130 et 132. Le rapport signal/bruit de la mesure s'en trouve ainsi sensiblement amélioré.

En outre, le mode d'excitation par impulsion du générateur X se prête bien à l'utilisation de détecteurs à semi-conducteurs, par exemple au tellurure de cadmium ou à l'iodure de mercure, de petite taille, en raison du niveau élevé des intensités $I'_1$ et $I'_2$ recueillies. Ces détecteurs peuvent notamment présenter un intérêt pour la mesure de l'homogénéité du fluide analysé, en particulier dans les puits déviés.

L'emploi d'un générateur de rayons X tel que l'émetteur 80 dans le cadre d'une mesure dans un puits de pétrole en production est intéressant car, contrairement aux sources chimiques, c'est-à-dire comprenant un isotope radio-actif, il ne présente pas de risques de contamination du puits en cas de perte (rare mais qui ne peut être totalement exclue) de la sonde.

Un générateur de rayons X tel que le générateur 80 présente également l'avantage de fournir un flux élevé de photons, qui se prête donc à l'obtention de mesures rapides pour l'étude dynamique des écoulements.

La précision des mesures obtenues dépend du taux de comptage des détecteurs utilisés. L'utilisation d'une source à flux de photons élevé est donc un facteur favorable à cet égard.

On peut aussi utiliser le générateur de rayons X 80 en modulant la tension d'accélération des électrons sur l'anode 94 du tube 80 d'une manière qui peut être continue et non pulsée.

Pour une tension d'accélération $V_0$, l'énergie moyenne des photons émis est $E = \frac{2}{3} e V_0$ (où $\underline{e}$ est la charge de l'électron). Si l'on fait varier la tension d'accélération autour de la tension $V_0$, on a la possibilité d'agir sur cette énergie moyenne E et de faire ainsi varier l'importance de l'absorption photo-électrique du milieu considéré.

Le signal mesuré sur un détecteur 82 ou 84 est alors de la forme :

$$I_D = I_O \; \Omega \; \rho \; e^{-(\alpha \, U + \beta \, \rho) \, D}$$

avec

$$\alpha = \alpha_o \left(\frac{\hat{E}}{\hat{E}_O}\right)^{-3}$$

$\beta$ peu variable avec l'énergie des photons X.

En modulant par un signal de tension sinusoïdal l'énergie des photons avec un taux de modulation de $-\Delta \bar{E}/\bar{E}_O$ (où $\bar{E}_O$ correspond à la tension $V_O$), on obtient :

$$I_D = I_O \; \Omega \; \rho \; e^{-\left(\alpha_o \, (1+\frac{\Delta \hat{E}}{\hat{E}_O} \sin \omega t)^3 \, U + \beta \rho\right) D}$$

Le signal à la sortie du détecteur est donc un courant constitué par une composante moyenne qui dépend de plusieurs variables, dont la densité du milieu, et d'une composante sinusoïdale qui dépend essentiellement du coefficient d'absorption photo-électrique U de ce même milieu.

On a représenté sur la figure 11 la courbe 195 des variations en fonction de temps du courant $I_D$, obtenu à la sortie 208 de l'amplificateur 206 de la figure 8. Ce signal est affecté de variations rapides à la fréquence de modulation de la tension d'alimentation du générateur X superposées à une valeur moyenne $I_{DO}$ représentée par une courbe en tiret sur la figure 11 et dont la valeur varie notamment comme une fonction de la densité.

L'amplitude $\Delta I_D$ de la modulation sinusoïdale superposée à l'amplitude moyenne $I_{DO}$ est au contraire essentiellement une fonction du coefficient d'absorption photo-électrique.U.

Ainsi, le filtrage du signal à l'aide de filtres passe-bas et passe-haut non représentés, permet de séparer la composante continue $I_{DO}$ et la composante alternative d'amplitude $\Delta I_D$ pour obtenir une mesure directe des valeurs $\rho$ et U.

Grâce à l'utilisation de l'absorption photo-électrique, la précision de la mesure du rapport eau/pétrole est sensiblement augmentée par rapport à celle qui peut être obtenue par une mesure de densité seule. La mesure de la grandeur L' effectuée à "basse" énergie est, en effet, environ quatre fois plus sensible aux variations de ce rapport que la mesure obtenue à "haute" énergie.

Ainsi par exemple, pour une variation de 1% du rapport eau/fluide total V, correspondant à une variation de densité de 0,002 g/cm3, les variations respectives $dH'/H'$ et $dL'/L'$ des grandeurs $H'$ et $L'$ sont 0,7% et 2,6%, respectivement.

La mesure permet également une détermination précise de la salinité de l'eau de formation. La mesure à "basse" énergie L' est en effet environ dix fois plus sensible aux variations de salinité que la mesure à "haute" énergie. Elle permet notamment de détecter des variations correspondant à 1,5 kg de sel par m3 de pétrole brut ($10^3$ litre) alors que la variation de densité correspondante est en général indétectable.

Une telle mesure précise de la salinité est avantageuse notamment pour détecter des productions excessives de sel dans le flux de pétrole obtenu à partir d'une couche productrice déterminée. Elle permet également d'effectuer un contrôle précis du déroulement des techniques d'injection d'eau dans les couches pétrolifères pour un meilleur rendement de la production.

Enfin, un outil tel que décrit, comportant un générateur de rayons X et deux détecteurs (figure 3) peut être appliqué à l'étude du régime d'écoulement d'un puits de pétrole en production, grâce à la rapidité des mesures qu'il est capable d'effectuer. Cette rapidité permet en effet de détecter le déplacement de zones d'hétérogénéité telles que des bulles d'huile dans l'eau ou de gaz dans le liquide entre le premier et le deuxième détecteur.

Revendications

1. Procédé pour mesurer l'absorption d'un flux de photons par le fluide s'écoulant dans un puits de pétrole en vue de produire au moins une mesure indicative d'au moins une caractéristique en rapport avec la composition du fluide, caractérisé par le fait qu'il comprend les opérations suivantes :

- on descend dans le puits une sonde allongée (60) comprenant une source de photons (80) et au moins un détecteur (82) placés à distance l'un de l'autre dans la direction longitudinale ;

- on produit au moyen de la source un flux de photons dont l'énergie est inférieure à un niveau déterminé, choisi de façon que les parois (44) du puits soient capables d'absorber la quasi-totalité des photons arrivant à leur contact ;

- on dirige ledit flux de photons de façon à irradier le fluide (76) entourant la sonde de manière symétrique par rapport à l'axe de celle-ci ;

- on détecte au moyen du détecteur le flux de photons résultant de l'interaction du flux émis avec le fluide ;

- on déduit ladite mesure du signal de sortie du détecteur.

2. Procédé selon la revendication 1, caractérisé par le fait que l'énergie des photons émis est inférieure à 100 kev.

3. Procédé selon l'une des revendications 1 et 2, caractérisé par le fait que le flux émis comprend des premiers photons ayant un niveau d'énergie bas (L) pour lequel l'absorption photoélectrique est significative et des seconds photons ayant un niveau d'énergie plus élevé (H), pour lequel la diffusion Thomson est prédominante, et l'on produit une première et une seconde mesures en réponse à la détection respectivement des premiers et des seconds photons, lesdites mesures étant indicatives du coefficient d'absorption photoélectrique (U) et de la densité (P) du fluide.

4. Procédé selon l'une des revendications 1 et 2, caractérisé par le fait qu'on produit un flux de photons ayant un spectre d'énergie continu au moyen d'un générateur de rayons X (80).

5. Procédé selon la revendication 4, caractérisé par le fait que l'on détecte en outre le flux résultant au moyen d'un autre détecteur (84) écarté longitudinalement du premier détecteur d'une distance déterminée (D), et on déduit des signaux de sortie des détecteurs au moins une mesure de l'absorption consécutive au parcours de cette distance dans le fluide.

6. Procédé selon l'une des revendications 4 et 5, caractérisé par le fait que le générateur de rayons X est commandé de façon à produire de façon continue un flux de photons ayant un spectre d'énergie déterminé incluant une plage d'énergie basse pour laquelle l'absorption photoélectrique est significative, et une plage d'énergie plus élevée pour laquelle la diffusion Thomson est prédominante, et on mesure le flux résultant à l'intérieur d'une première et d'une seconde fenêtres d'énergie Lo et Ho, de façon à distinguer entre les photons émis à basse énergie et les photons émis à énergie plus élevée, pour produire une première et une seconde mesures, lesdites mesures étant indicatives du coefficient d'absorption photoélectrique et de la densité du fluide.

7. Procédé selon la revendication 6, caractérisé par le fait que lesdites première et seconde fenêtres d'énergie sont centrées respectivement sur environ 30 kev et 60 kev.

8. Procédé selon l'une des revendications 4 et 5, caractérisé par le fait que l'on produit au moyen du générateur de rayons X un flux de photons dont le spectre d'énergie varie dans le temps selon une loi déterminée entre un premier spectre ayant une énergie moyenne pour laquelle l'absorption photoélectrique est significative et un second spectre ayant une énergie moyenne plus élevée pour laquelle la diffusion Thomson est prédominante.

9. Procédé selon la revendication 8, caractérisé par le fait que l'on mesure l'intensité totale du flux résultant.

10. Procédé selon l'une des revendications 8 et 9, caractérisé par le fait que l'on produit au moyen du générateur de rayons X (80) alternativement un premier flux de photons présentant ledit premier spectre et un second flux de photons présentant ledit second spectre, et l'on produit alternativement une première et une seconde mesures de façon correspondante.

11. Procédé selon la revendication 9, caractérisé par le fait que ladite loi est une fonction sinusoïdale (195; la mesure produite ayant une valeur moyenne indicative de la densité du fluide et présentant des variations périodiques autour de cette valeur moyenne dont l'amplitude est indicative du coefficient d'absorption photo-électrique du fluide.

12. Procédé selon l'une des revendications 8 à 11, caractérisé par le fait que le premier et le second spectres ont respectivement des valeurs moyennes d'environ 30kev et 60 kev.

13. Procédé pour analyser le fluide s'écoulant dans un puits de pétrole, le fluide comprenant un mélange de pétrole et d'eau salée, caractérisé par le fait qu'il comprend les opérations suivantes :
- on descend dans le puits (58) une sonde allongée (60) comprenant une source de photons (80) et au moins un détecteur (82) placés à distance l'un de l'autre dans la direction longitudinale ;

- on produit au moyen de la source un flux de photons dont l'énergie est inférieure à un niveau déterminé, choisi de façon que les parois (44) du puits soient capables d'absorber la quasi-totalité des photons arrivant à leur contact, le flux émis comprenant des premiers photons dans une plage d'énergie basse (Lo) pour laquelle l'absorption photoélectrique est significative et des seconds photons dans une seconde plage plus élevée (Ho) pour laquelle la diffusion Thomson est prédominante ;

- on dirige ledit flux de photons de façon à irradier le fluide entourant la sonde de manière symétrique par rapport à l'axe de celle-ci ;

- on détecte au moyen du détecteur (82) le flux de photons résultant de l'interaction du flux émis avec le fluide (76) ;

- on produit une première et une seconde mesures (L', H') en réponse à la détection respectivement des premiers et des seconds photons ;

- on combine ces mesures pour déterminer le coefficient d'absorption photoélectrique (U) et la densité (P) du fluide ;

- on détermine à partir dudit coefficient et de ladite densité les proportions d'eau (V) et de pétrole (1 - V) et la salinité (5) de l'eau.

14. Sonde de diagraphie adaptée au déplacement dans un puits de pétrole, destinée à produire au moins une mesure indicative d'au moins une caractéristique en rapport avec la composition du fluide du puits, caractérisée par le fait qu'elle comprend :

- un corps allongé (70) ;

- une source de photons (80) solidaire du corps, cette source étant capable de produire un flux de photons dont l'énergie est inférieure à un niveau déterminé, choisi de façon que les parois du puits soient capables d'absorber la quasi-totalité des photons arrivant à leur contact ;
- au moins un détecteur de photons (82) solidaire du corps et écarté longitudinalement de la source d'une distance ($L_1$) déterminée ;
- un écran (79) absorbant les photons, placé entre la source et le détecteur ;
- des moyens (104, 116) pour diriger le flux émis par la source vers l'extérieur du corps en direction du détecteur (82), de manière symétrique autour de l'axe de la sonde (60) ;
- des moyens de traitement pour déduire ladite mesure du signal de sortie du détecteur.

15. Sonde selon la revendication 14, caractérisée par le fait que les photons que peut émettre la source ont une énergie inférieure à 100 kev.

16. Sonde selon l'une des revendications 14 et 15, caractérisée par le fait que le flux que la source est capable d'émettre comprend des premiers photons ayant un niveau d'énergie bas pour lequel l'absorption photoélectrique est significative et des seconds photons ayant un niveau d'énergie haut pour lequel la diffusion Thomson est prédominante, et lesdits moyens de traitement comprennent des moyens de sélection spectrale (150, 160) de façon à produire une première et une seconde mesure en réponse à la détection des premiers et des seconds photons, lesdites mesures étant indicatives du coefficient d'absorption photoélectrique et de la densité du fluide.

17. Sonde selon l'une des revendications 14 et 15, caractérisée par le fait que la source de photons est un générateur de rayons X (80) comprenant un dispositif de production de photons produisant un flux de photons à spectre d'énergie continu en réponse à l'application d'une tension électrique et un dispositif d'alimentation capable de fournir une telle tension électrique.

18. Sonde selon la revendication 17, caractérisée par le fait qu'elle comprend un autre détecteur (84) solidaire du corps, écarté longitudinalement du premier détecteur (82) d'une distance déterminée (D).

19. Sonde selon l'une des revendications 17 et 18, caractérisée par le fait que, en service, le dispositif d'alimentation applique de façon continue une tension telle que le flux émis comprenne des premiers photons ayant un niveau d'énergie bas pour lequel l'absorption photoélectrique est significative et des seconds photons ayant un niveau d'énergie haut pour lequel la diffusion Thomson est prédominante, et lesdits moyens de traitement comprennent des moyens de sélection spectrale (150, 160) de façon à produire une première et une seconde mesures en réponse à la détection des premiers et des seconds photons, lesdites mesures étant indicatives du coefficient d'absorption photoélectrique et de la densité du fluide.

20. Sonde selon l'une des revendications 17 et 18, caractérisée par le fait que, en service, le dispositif d'alimentation applique une tension qui varie dans le temps selon une loi déterminée entre une valeur basse et une valeur haute, ces valeurs étant telles que, à la valeur moyenne du spectre d'énergie du flux émis, l'absorption photoélectrique soit significative lorsque la valeur basse est appliquée et que la diffusion Thomson soit prédominante lorsque la valeur haute est appliquée.

21. Sonde selon la revendication 20, caractérisée par le fait que les moyens de traitement sont agencés pour fournir une mesure de l'intensité totale du flux résultant.

22. Sonde selon l'une des revendications 20 et 21, caractérisée par le fait que, en service, le dispositif d'alimentation applique alternativement ladite valeur basse et ladite valeur haute.

23. Sonde selon l'une des revendications 20 et 21, caractérisée par le fait que ladite loi est une fonction sinusoïdale.

24. Sonde selon l'une des revendications 20 à 23, caractérisée par le fait que ladite valeur basse est d'environ 50 kv et ladite valeur haute d'environ 100 kv.

FIG. 1

FIG.3

FIG. 10

FIG. 2

0069679

## FIG. 4

## FIG. 5

FIG. 6

FIG. 11

N(E) CpS

$I_D$

$\Delta I_D$

195

$I_{D_0}$

t

120

121

$V_1$ (L)     L     $V_2$ (L)     $V_1$ (H)     H     $V_2$ (H)

$L_0$

$H_0$

$E_{Kev}$

FIG.7

FIG.8

FIG.9

5/5

0069679